# EUROPEAN PATENT SPECIFICATION

(11) **EP 0 594 788 B1**
(45) Date of publication and mention of the grant of the patent: **04.11.1998**
(21) Application number: 92916976.1
(22) Date of filing: 09.07.1992
(51) Int. Cl.: C12C 3/12

(54) **HOPS-DERIVED FOAM STABILIZING AND BITTERING AGENTS**
SCHAUM STABILISIERENDE AGENTIEN UND BITTERMACHER AUS HOPFEN
AGENTS DERIVES DU HOUBLON UTILISES POUR STABILISER LA MOUSSE ET LUI DONNER SON AMERTUME

(30) Priority: 15.07.1991 US 729922
(43) Date of publication of application: 04.05.1994
(73) Proprietor: S.S. STEINER, INC., New York, NY 10021-8078 (US)
(72) Inventor: SMITH, Robert, J., Yakima, WA 98908 (US); WILSON, Richard, J., H. 29 Newlands Park, West Sussex RH10 3EW (GB)
(74) Representative: Des Termes, Monique
(86) International application number: US9205754
(87) International publication number: WO9302177

(56) References cited:
- EP-A- 0 080 582
- CA-A- 619 563
- FR-A- 2 590 589
- GB-A- 1 140 545
- US-A- 5 013 571
- JOURNAL OF THE CHEMICAL SOCIETY 1959, LONDON GB pages 545 - 551 P. M. BROWN ET AL. 'CHEMISTRY OF HOP CONSTITUENTS. PART XIII. The Hydrogenation of Isohumulone.'
- BULLETIN DES SOCIETES CHIMIQUES BELGES vol. 68, 1959, LOUVAIN BE pages 315 - 324 M. VERZELE ET AL. 'ON THE HYDROGENATION OF HUMULONE. PART I . The Preparation of Tetrahydrohumulone.'
- JOURNAL OF THE AMERICAN CHEMICAL SOCIETY. vol. 74, 1952, GASTON, PA US pages 4615 - 4620 J.F. CARSON 'THE ALKALINE ISOMERIZATION OF HUMULONE'

## Description

### Field of the Invention

This invention relates to the production of hops derived compounds suitable for bittering beer, and for improving the foam stability of beer.

### Background of the Invention

In the traditional process of brewing beer, hops are boiled with wort to extract the bittering principles and other flavor components. The wort is then cooled and fermented by addition of yeast. After fermentation, the yeast is removed and a clarified beer produced. It is now known that the "natural" beer bitterness produced in a traditional brewing process is largely derived from a group of compounds known as alpha-acids, that are present in the resin fraction of the hop lupulin glands. These compounds are extracted into the boiling wort and then may undergo chemical reaction to form a variety of substances, chief of which are the iso-alpha-acids. It is these iso-alpha-acids that are largely responsible for the bitter flavor in beer. Another important function of the iso-alpha-acids is to assist in the formation of the foam head that forms when carbonated beer is poured into a glass. Beer foam has a complex structure, but is primarily dependent on the presence of certain proteins that have both hydrophobic and hydrophilic regions. The presence of iso-alpha-acids is well known to stabilize beer foam by interacting in a positive fashion with the proteins and encouraging the formation of a head that has a greater density of gas bubbles per unit volume. Such foam usually shows an increased propensity to exhibit enhanced "lacing" and "cling" on the sides of the glass as the beer is drunk, characteristics that are generally perceived as aesthetically pleasing to the consumer.

It has long been known that the so-called "utilization" of hop alpha-acids added to the wort kettle in traditional brewing practice is poor. Typically, only 30-40% of the added alpha-acids appear subsequently as iso-alpha-acids in the beer. For example, if the hops are insufficiently boiled in the wort, then much of the alpha-acids may remain unconverted. Another source of inefficiency are the many side reactions of alpha-acids that occur during wort boiling, producing compounds that are not necessarily bitter. Also, the boiling of wort inevitably produces a proteinaceous precipitate referred to as "trub" or "hot break" and it is known that this material tends to attract deposition of iso-alpha-acids. Normal brewery practice is to remove most of this material by filtration or, more commonly, by the action of a whirlpool separator. About 20% of the iso-alpha-acids present in the whole wort may be lost in this way. Subsequent cooling of the hot wort leads to formation of further precipitated organic material (the "cold break") which again may absorb a proportion of the iso-alpha-acids. Further losses of dissolved iso-alpha-acids occur during the fermentation of the wort. Adsorption onto the virgin walls of multiplying yeast cells occurs, no doubt encouraged by the falling pH value of the wort as it is transformed into beer. Furthermore, a tendency for the iso-alpha-acids to concentrate in the foam head that usually forms in the absence of added antifoams often results in deposition and subsequent loss of iso-alpha-acids on the walls of the fermenting vessel. Overall, a loss of 20-40% of the iso-alpha-acids through the fermentation stage is to be expected. Finally, a further significant loss may occur during fining and filtration before the beer is eventually packaged.

In order to maximize the utilization of alpha-acids, it was long ago proposed that addition of iso-alpha-acids post-fermentation would be advantageous, provided that one could efficiently prepare a suitable formulation of these bittering substances from the natural hop alpha-acids. Several processes for the preparation of so-called "isomerized extracts" have been devised. For example, in U.S. Patent No. 3,364,265, Klingel et al describe the production of iso-alpha-acids in sodium salt form obtained via hot alkaline aqueous solution treatment of alpha-acids obtained from organic solvent extraction of hops. In U.S. Patent No. 3,973,052, Mitchell describes the production of highly concentrated aqueous solutions of potassium iso-alpha-acid salts that are particularly convenient to handle and may be added directly to beer. More recently, Forrest, Seaton and Moir in U.S. Patent No. 4,212,895 demonstrate the production of such a "liquid" isomerized extract from hop resin extracts prepared by extraction of hops using liquid or supercritical carbon dioxide. CO₂ extracts are especially suitable for use as raw material for production of isomerized extracts because they are generally of higher purity, often being essentially free from hard resins, chlorophyll and much of the hop waxes which may be present in extracts commonly prepared by use of organic solvents such as dichloromethane, ethanol or hexane. The process of U.S. Patent No. 4,212,895 is of particular interest as it allows production of isomerized extracts from CO₂ hop extracts without the use of undesirable solvents or unnatural chemical substances at any stage. In this way, isomerized extracts can be prepared that are virtually or totally free from traces of compounds that might be harmful to health or to beer flavor. Such extracts are in common use throughout the brewing industry. They serve two main purposes: first, to reduce costs by greatly improving the utilization of the hop alpha-acids and, secondly, to provide a convenient means whereby the brewer may regulate the bitterness of the beer via a "topping-up" procedure. (In fact, these benefits go hand in hand, for it is well known that utilization of the alpha-acids added to the wort kettle is increased if the quantity added is reduced.)

It is important during manufacture of isomerized extract intended for addition to beer to remove as far as is reasonably practicable the beta-acids which are natural and major components of the hop resin fraction within the lupulin glands. These beta-acids are chemically closely related to the alpha-acids and are extracted together with the alpha-acids by organic solvents or by liquid or supercritical CO₂. Dependent primarily on hop variety, the ratio of beta-acid to alpha-acid in a hop extract may vary between about 0.25:1 to about 1.2:1. Beta-acids are of little value in normal brewing as they do not isomerize and are particularly insoluble in wort or beer, causing undesirable hazes if present in added isomerized extract. Because of their close chemical relationship to the alpha-acids, it has occurred to many workers to attempt to convert the beta-acids contained in a hop extract into alpha-acids or other useful substances, thereby enhancing the brewing value of the extract. In the course of such work, many transformations of beta-acids were discovered, leading not only to processes whereby beta-acids could be converted to alpha-acids and hence to iso-alpha-acids, but also to other previously known or unknown derivatives of both alpha-acids and beta-acids. These discoveries have been reviewed by several authors, including, for example, Verzele in J. Inst. Brew. 92 32-48 (1986). Processes have been described for the production of several derivatives of alpha-acids and beta-acids that have chemical or physical properties that are of acknowledged value in brewing. Important amongst these derivatives are those that take the form of modified iso-alpha-acids in which the properties of the natural iso-alpha-acids have, in effect, been usefully altered through chemical reduction of their molecular structures. This reduction takes place within one or more of the three side chains present in all iso-alpha-acids and involves the addition of up to six hydrogen atoms in total per molecule.

In U.S. Patent No. 3,079,262 Hougen described a process for the formation of tetrahydro-alpha-acids by reduction of the alpha-acids present in hop extract using hydrogen gas in the presence of a noble metal catalyst. Hougen demonstrated that the tetrahydro-alpha-acids would be subsequently transformed to tetrahydro-iso-alpha-acids if the modified extract was then added to wort and boiled in the usual way. Beer prepared in this way was bitter and had the useful property of resisting formation of unpleasant "light-struck" or "skunky" flavors when exposed to sunlight, a phenomenon known to occur in normal beer due to a reaction between iso-alpha-acids and naturally present mercaptans. Subsequently, other workers described routes to tetrahydro-iso-alpha-acids starting from beta-acids. For example, Worden and Todd in U.S. Patent No. 3,522,975 showed the formation of tetrahydro-iso-alpha-acids by a three-step process firstly involving hydrogenolysis to form 4 - deoxytetrahydro-alpha-acids, followed by oxidation to tetrahydro-alpha-acids and finally by isomerization in hot aqueous alkali to the tetrahydro-iso-alpha-acids. The same patent also describes the novel formation of hexahydro-iso-alpha-acids, effected by further reduction of the tetrahydro-iso-alpha-acids using sodium borohydride. It was noted that not only was this compound bitter and of value to prevent "light-struck" flavor formation, but it also induced a particularly stable foam when added to beer, as is also found to be true of the tetrahydro-iso-alpha-acids. As it turns out, the various properties of tetra- and hexa- hydrogenated iso-alpha-acids have, in practice, been found to be of significant commercial value. Tetrahydro-iso-alpha-acids preparations have been most favored, not only because they are simpler to prepare but because they are also perceived to be substantially more bitter than either hexahydro-iso-alpha-acids or iso-alpha-acids (Todd, Johnson & Worden, Tech. Quart. Master Brewers Association of the Americas, 9, pp 31-35, [1971]).

A major drawback to the widespread use of tetra- (or hexa-) hydro-iso-alpha-acids is the unnaturalness of these compounds. Neither class of substance has ever been reported as occurring naturally in beer produced from hops, hop pellets or hop extracts added to the wort kettle. Similarly, the presence of hydrogenated forms of alpha-acids has never previously been observed to occur naturally in hops or hop products not subjected to deliberate chemical transformations. Brewers are increasingly reluctant to use unnatural additives even though proven safe for fear of alienating certain of their customers who may object to "adulteration" of the product.

Carson in Journal of the American Chemical Society, 1952, vol. 74, pages 4615-4620, discloses the alkaline isomerization of humulone and the hydrogenation of dextro- and levorotatory isohumulones in the presence of palladium-on-carbon to the corresponding dihydroderivatives still optically active.

P.M. Brown et al in Journal of the Chemical Society, 1959, pages 545-551, disclose the hydrogenation of isohumulone A over Adams catalyst in aqueous sodium carbonate, which gives a resinous product identified as being dihydroderivative of isohumulone A.

### Objects of the Invention

It is an object of the present invention to provide bittering and foam stabilizing systems, i.e. methods and materials, which overcome disadvantages of the prior art. A particular object of the present invention is to provide a foam stabilizing material that is demonstrably natural. The present invention is based on the discovery that certain compounds which we find are naturally present in quite minor (functionally insignificant) amounts in hops, advantageously may be employed as beer foam stabilizing and bittering substances after conversion to their isomerized derivatives.

In particular, we have discovered that dihydro-alpha-acids (which compounds heretofore were known only as intermediates in the production of tetrahydro-alpha-acids), especially dihydro-humulone are valuable in this respect.

So, the present invention has for object a method of preparing a malt beverage in which wort is prepared and fermented, and a foam stabilizing and bittering agent added, characterized by adding as a foam stabilizing and bittering agent from about 2 to about 30 ppm of at least one dihydro-iso-alpha acid.

Another object of the invention is a process for producing a foam stabilizing and bittering agent for a malt beverage, characterized by the steps in sequence of: (1) extracting pelletized hops using supercritical CO₂ or liquid CO₂, under conditions which favor the separation and recovery of a fraction rich in alpha-acids ; (2) subjecting the alpha-acids fraction to selective hydrogenation in the presence of a Pt/alumina catalyst or a Pt/carbon catalyst or to conversion by reaction in the presence of 0.3 to 0.6 equivalents of alkali per mole of alpha-acids, in a substantially non-aqueous environment, so as to produce dihydro-alpha-acids; and (3) isomerizing said dihydro-alpha-acids, so as to form dihydro-iso-alpha-acids.

A further object of the invention is a catalytic hydrogenation of alpha-acids to form dihydro-alpha-acids under reaction conditions that favor the formation of dihydro-alpha-acids to tetrahydro-alpha-acids in a ratio of in excess of about 4.3 - 12.7 to 1.0, and wherein the reaction is conducted in the presence of a Pt/alumina catalyst or a Pt/carbon catalyst.

### Description of the Drawings

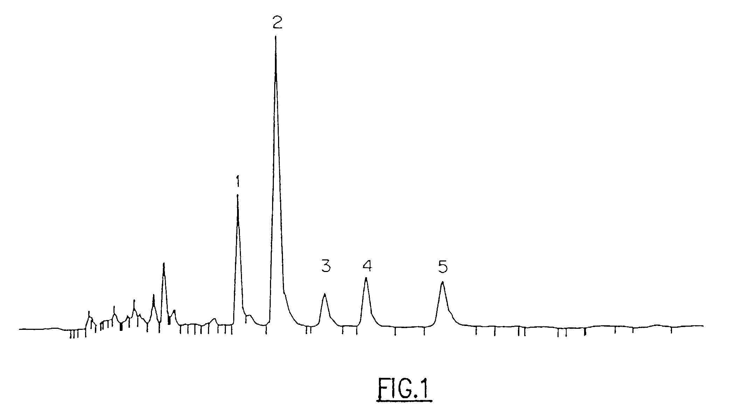

Further features and advantages of the present invention may be seen from the following detailed description of the invention taken in conjunction with the drawings in which Figs. 1 to 3 are chromatograms illustrating analyses of materials in accordance with the present invention.

### Detailed Description of the Invention

As used herein the nomenclature dihydro-alpha-acids and dihydro-iso-alpha-acids and "adprehumulone" means compounds of the general structures shown in Formula Drawings 1-3: 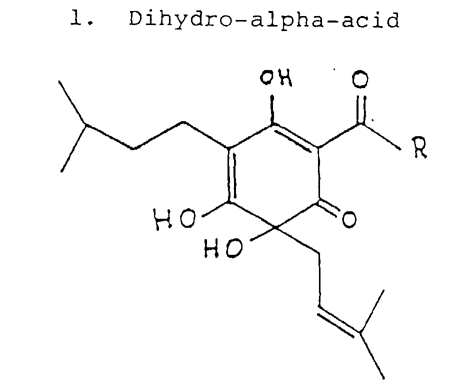 R is a straight or branched chain alkyl, preferably
-CH(CH₃)₂ (= -cohumulone)
-CH₂CH(CH₃)₂ (= -humulone)
-CH(CH₃)CH₂CH₃ (= -adhumulone) 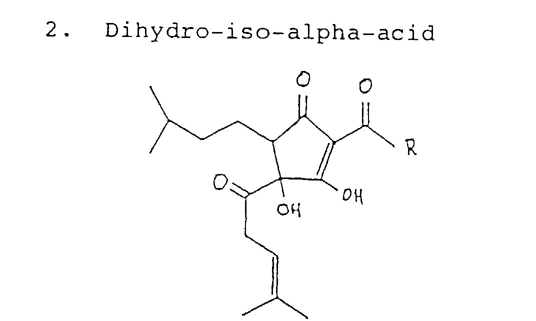 R groups as for Formula Drawing 1 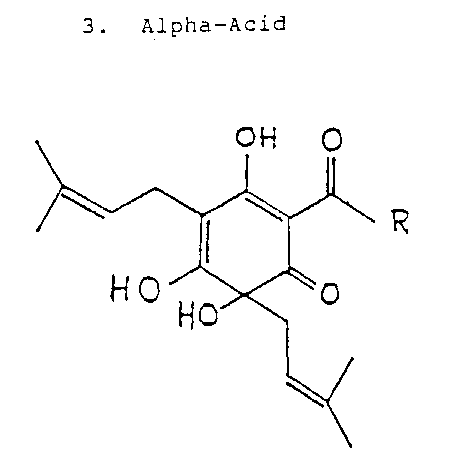 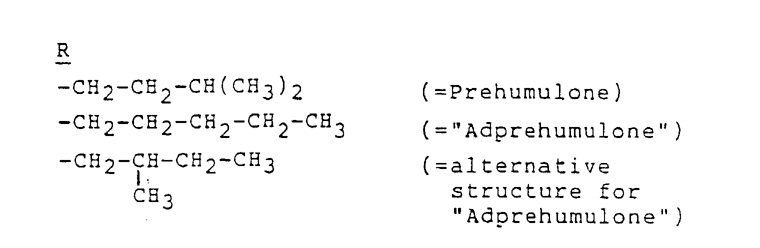 We specifically exclude other possible dihydrogenated forms of alpha-acids or iso-alpha-acids that have been assigned the same nomenclature by previous authors, as for example by Todd, Johnson and Worden in Tech. Quart. of the Master Brewers Association of the Americas, 9 pp 31-35, (1971) and by Anteunis & Verzele in Bull. Societé Chimique Belges, 68, 102 & 476 (1959). Dihydro-alpha-acids are known to be formed as intermediates in the catalytic hydrogenation of alpha-acids to tetrahydro-alpha-acids. However, the use of such compounds (and in particular dihydro-iso-humulone) as foam stabilizing and bittering compounds has not previously been described since such compounds heretofore have been considered merely to be intermediates for the production of tetrahydro-iso-alpha-acids. We have found that dihydro-iso-alpha-acids are about as bitter as iso-alpha-acids, but are more potent foam stabilizing substances than their corresponding iso-alpha-acid homologs or analogs. In particular, preparations containing a major proportion of isomerized hop compounds as dihydro-iso-humulone have an ability to enhance beer foam and cling that is similar to commercially available preparations of tetrahydro-iso-alpha-acids.

The dihydro-alpha-acids useful (after isomerization) in accordance with the present invention are found to exist in quite minor (functionally insignificant) amount, e.g. about 0.002% by weight, in fresh, dried hops. However, the concentration appears to increase with mechanical processing and aging. Thus, we have observed concentrations of about 0.04% by weight in one year old, cold stored hop pellets; about 0.10% in three year old, cold stored hop pellets; and of about 0.27% in ambient stored, three year old hop pellets. Aged extracts also appear to show increased concentrations of dihydro-alpha-acids. Particularly striking, a 1988 dichloromethane extract (standardized with water-solubles) was found to contain 3.2% of dihydro-humulone (+dihydro-adhumulone) when analyzed in 1991.

While not wishing to be bound by theory, it is believed that the formation of dihydro-alpha-acids in hops, hop pellets and hop extracts is due to a hitherto unknown and surprising reaction that can occur between molecules of alpha-acids. This reaction may be enhanced in accordance with one aspect of the present invention by the addition of a sub-equivalent proportion of simple alkaline substances, and results in the formation of dihydro-alpha-acids and other presently unidentified derivatives of alpha-acids, but without the slightest detectable formation of tetrahydro- or other undesirable hydrogenated derivatives of alpha-acids. This is surprising since conventional catalytic hydrogenation of alpha-acids to produce dihydro-alpha-acids in accordance with the prior art invariably produces at least some tetrahydro-alpha-acids.

Currently, there are two basic preferred routes by which dihydro-humulone (and other dihydro-alpha-acids) may be formed suitably for use as precursor to the formation of dihydro-iso-humulone (and other dihydro-iso-alpha-acids) in accordance with the present invention.

One route involves the catalytic hydrogenation of alpha-acids under conditions that favor the formation of dihydro-alpha-acids. The catalytic hydrogenation of alpha-acids to form tetrahydro-alpha-acids is well known in the prior art. Anteunis & Verzele also report in Bull. Societé Chimique Belges 68, pp 315-324 (1959) reaction conditions under which a molar ratio yield of dihydro-humulone to tetrahydro-humulone of about 4:1 can be obtained. We have discovered that using certain selected catalysts such as Pt/Alumina and Pt/Carbon, and by conducting the hydrogenation reaction at moderately low temperatures, e.g. 0° to 40°C, it is possible to achieve molar ratio yields of the desired dihydro-alpha-acids to tetrahydro-alpha-acids of up to about 10:1 or more. The undesirable tetrahydro-alpha-acids may then be removed using conventional separation techniques.

In the second instance, we have discovered a route to the formation of dihydro-alpha-acids completely free from concurrent formation of tetrahydro- or hexahydro-alpha-acids. More particularly, we have discovered that alpha-acids, particularly humulone, can be converted to corresponding dihydro-alpha-acids in an unusual solid (or near solid) state reaction in the presence of sub-equivalent amounts of alkali, preferably 0.3 to 0.6 equivalents of alkali per mole of alpha-acids, more preferably about 0.4 equivalents of alkali per mole of alpha-acids, whereby the alpha-acids are partially converted to their alkali metal salts. Various alkali agents advantageously may be used in accordance with the present invention, amongst which are mentioned NaOH, LiOH, KOH, Na₂CO₃, NaHCO₃, Na₂HPO₄, K₂HPO₄ and K₂CO₃.
Preferably, this reaction is conducted at relatively low temperature, specifically below about 80° C.

The alpha-acid that we term "adprehumulone" is believed to be identical with one of two closely related compounds tentatively identified in 1962 as present in hops by Rigby, Sihto & Bars (J. Inst. Brewing (1962), 68, pp 60-65), and considered at that time to be dual components of an alpha-acid fraction obtainable from extracted hops with the aid of countercurrent distribution. This fraction was first obtained by Verzele (Bull. Soc. Chim. Belg. (1955), 64, pp 70-86) and was termed "prehumulone". In later work, Rillaers and Verzele (in Bull. Soc. Chim. Belg. (1962), 72, pp 438-445) described the purification of "prehumulone" and, with the aid of NMR analysis, assigned a specific, single structure to this compound that was identical to one of the two prehumulones described by Rigby and co-workers. It has since become commonly accepted that the term "prehumulone" refers only to the compound described by Rillaers and Verzele. We now demonstrate the existence of a naturally occurrent alpha-acid that we tentatively identify as the alternative prehumulone of Rigby and co-workers. We term this substance "adprehumulone" and confirm it to be of identical molecular weight but structurally distinguishable from the prehumulone of Rillaers and Verzele, though we do not discount the possibility that we have discovered a previously unknown alpha-acid of closely related structure as indicated in Formula Drawing 3. As is well-known, alpha-acids, when present in beer as iso-alpha-acids, are important foam stabilizers. In view of the structural similarity of prehumulone and "adprehumulone", it is surprising that we find iso-"adprehumulone" to be a much more potent foam stabilizer than iso-prehumulone.

### Working Examples

The following examples include the illustration of means whereby dihydro-alpha-acids may be formed either in the absence or, alternatively, in the minor presence of tetrahydro-alpha-acids, and the complete or virtual absence of hexahydro-alpha-acids. It is to be appreciated that the processes and conditions described are not exclusive and therefore do not preclude other reaction conditions that fall within the same basic principles.
Examples 1 to 3 describe the analysis of hops and hop products and establish the natural presence of minor (and generally functionally insignificant) amounts of dihydro-alpha-acids in hops and hop products;
Example 4 describes the analysis of beer and establishes the natural presence of minor (and functionally insignificant) amounts of dihydro-iso-humulone in beer;
Examples 5 to 10 illustrate the production of dihydro-alpha-acids in functionally useful quantities in accordance with the present invention;
Examples 11 to 13 illustrate the production of dihydro-iso-alpha-acids in functionally useful quantities in accordance with the present invention;
Example 14 illustrates the use of dihydro-iso-alpha-acids as foam stabilizing agents in accordance with the present invention;
Example 15 demonstrates the preparation of hydrogenated, isomerized resin extract (IRE) in functionally useful quantities in accordance with the present invention;
Example 16 illustrates the use of hydrogenated IRE as a foam stabilizing agent in accordance with the present invention; and
Example 17 illustrates the extraction and characterization of prehumulone from hops in functionally useful quantities;
Example 18 illustrates the preparation of iso-prehumulone in functionally useful quantities; and
Example 19 illustrates the comparative unsuitability of iso-prehumulone as a foam stabilizing agent in accordance with the present invention.

### EXAMPLE 1

### Dihydro-alpha-acids (especially Dihydro-humulone) in Hop Extract

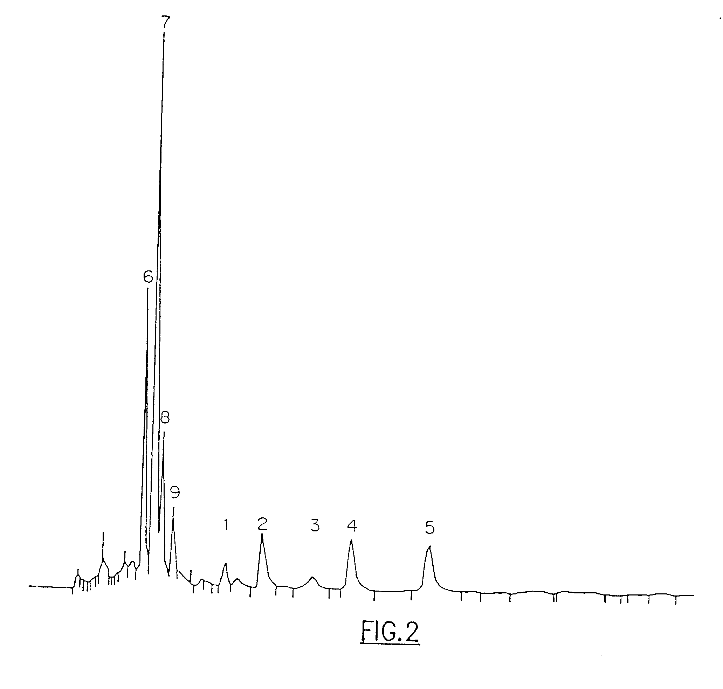

Dichloromethane extracts of hops that contained the water-solubles (prepared by Hops Extract Corporation of America, Yakima, Washington) were analyzed by reverse-phase, high-performance liquid chromatography (HPLC) at 20-25°C using an octadecyl, 5 µm silica (Nucleosil) column. The Mobile Phase "A" was 83 parts¹ methanol / 17 parts water / 0.24 parts 85% phosphoric acid / 0.05 parts 0.1 M Na₄EDTA at a flow rate of 1 ml/min. The absorbance of the eluants at 270 nm was continuously recorded. Some extracts had an unusually high amount of a compound that eluted about halfway between humulone+adhumulone (adhumulone co-eluted with humulone in this Mobile Phase) and colupulone. One extract contained 1.15% of the unknown compound (assuming that it had the same extinction coefficient as that of humulone), 11.8% alpha-acids and 4.92% beta-acids (Fig. 1). When this extract was heated anaerobically in a sealed, airtight container for 4 hours at 100°C, the HPLC peak corresponding to the unknown compound was observed to decline whilst another unidentified peak appeared (Fig. 2). This latter peak had the shorter retention time, being situated close behind a group of three peaks representing the major iso-alpha-acids. By running analyses at different wavelengths, it was determined that the original unknown compound had the spectral characteristics of an alpha-acid whilst the compound represented by the faster running peak had the spectral appearance of an iso-alpha-acid.
1. Throughout the specification, "parts" is to be taken to mean "parts by volume".

15.0 gm of the extract was extracted two times with 80 ml and then, subsequently, with 60 ml of hexane by shaking for 20 min. and sonicating for 10 min. The hexane extracts were filtered and the unknown compound partitioned into aqueous phase by successive washes with, firstly, 200 ml of 0.022 M NaOH (pH=10.0), followed then by 150 ml of 0.01 M NaOH (pH then adjusted to 9.9 with 2 M NaOH). The phases were separated by centrifugation and the pH of the aqueous phase was lowered to 2.0 and this phase extracted twice with dichloromethane (DCM). The aqueous phase was then discarded. The DCM was removed by rotary-evaporation and the weight of the resin obtained was 1.81 gm. By HPLC analysis, this resin contained an estimated 116 mg of the unknown compound. The resin was dissolved in 4 ml of methanol, filtered, and 0.9 ml aliquots injected (a total of six injections) onto a preparative HPLC column (22.5 x 250 mm, reverse-phase, octadecyl, 10 µm, Nucleosil) and eluted with 80.8 parts methanol / 19.0 parts water / 0.26 parts 85% phosphoric acid at 20 ml/min. The absorbance of the eluant was monitored at 270 nm. The eluant fractions that contained the unknown compound were collected, diluted with an equal volume of water and extracted successively with 0.3 and 0.15 volumes of DCM. After drying with Na₂SO₄, most of the DCM was removed by rotary-evaporation, the remainder transferred to a weighed vial and brought to constant weight under a stream of nitrogen followed by storage under reduced pressure. A yellow oil was obtained with a mass of 83.6 mg. HPLC analysis of the oil showed 3 impurity peaks, accounting for 4.3% of the total area. The structure of the unknown compound was elucidated from absorbance spectra, mass spectra (electron impact (EI) and chemical ionization (CI)), H- and carbon 13-NMR, homonuclear (H,H) and hetero-nuclear (H,C) correlation spectroscopy (COSY) and determined to be dihydro-humulone.

### EXAMPLE 2

### Dihydro-humulone in Hop Pellets

100 gm of 3 year old hop pellets (stored vacuum packed and refrigerated) were extracted three times with 220 ml of hexane. The filtrate (Whatman No. 4 paper) was rotary-evaporated to 100 ml. The hexane layer was washed with 250 ml of 0.1 M Na₂CO₃ to which was added 6.6 ml of 2M NaOH such that the pH of the aqueous phase was approximately 10. The phases were separated by centrifugation. The pH of the aqueous phase was lowered to 5.8 and then extracted successively with 100 ml and 2 x 50 ml of dichloromethane (DCM). The pooled DCM was removed by rotary-evaporation and the resin dissolved to a volume of 25 ml with methanol. A total of 8.8 ml of this solution, in 11 injections, was injected onto a preparative HPLC column (Example 1), and the resinous compounds eluted with Mobile Phase "A" (Example 1). The "dihydro-humulone" peak was collected and the compounds extracted twice from the eluant with DCM after addition of 0.7 volumes of water. The DCM phase was dried with Na₂SO₄, DCM removed by rotary evaporation and the resin dissolved in methanol. The compounds that coelute with dihydro-humulone (including dihydro-adhumulone) in the above Mobile Phase, as well as residual humulone and colupulone, were removed by preparative HPLC using the Mobile Phase "B": 73 parts methanol/27 parts water/0.24 parts glacial acetic acid/0.27 parts of 2M Sodium acetate/0.05 parts of 0.1M Na₄EDTA and the same column used above. Fractions containing 'dihydro-humulone' were pooled, the pH lowered with 85% phosphoric acid, and extracted twice with 0.3 and 0.15 volumes of DCM. The combined DCM layers were dried with Na₂SO₄. Most of the DCM was removed by rotary-evaporation, the sample transferred to a weighed vial and brought to constant weight. After evaporation of the DCM under a stream of nitrogen, there remained 21.7 mg. of a yellow oil that was determined to be 93% pure by HPLC. The 400 MHz H-NMR spectrum of the oil was nearly identical to the NMR spectrum of dihydro-humulone obtained from the extract in Example 1, except for the frequency of two of the hydroxyl protons. (The latter fact is not believed to indicate a structural difference between the two compounds examined). By analytical HPLC using a Mobile Phase "C" of 78 parts methanol / 22 parts water / 0.24 parts of glacial acetic acid / 0.27 parts of 2M sodium acetate/0.05 parts of 0.1M Na₄EDTA, the concentration of dihydro-humulone in these hop pellets was estimated to be 0.10%. This value is not considerably different from the value of 0.058% obtained by extraction, purification and weighing.

### EXAMPLE 3

### Dihydro-humulone in Baled Hops

The hop resins were extracted successively with 400 ml, 2 x 200 ml and finally 120 ml of hexane from 50.0 gm of freshly baled hops (1990 crop Chinook, stored under refrigeration for less than 1 month). The hexane was removed by rotary-evaporation and 9.11 g of resin extract obtained. 6.0 g of this extract, dissolved in 25 ml methanol, was eluted through a preparative HPLC column (Example 1, 22 injections), a total of 16 ml injected using Mobile Phase "A" (Example 1). Fractions containing a peak that coeluted with dihydro-humulone were pooled, extracted with DCM and rotary-evaporated. 91% of the residue was rechromatographed using a Mobile Phase "D" of 78 parts methanol / 22 parts water / 0.24 parts of 85% phosphoric acid / 0.05 parts of 0.1 M Na₄EDTA. Once again, fractions containing the "dihydro-humulone" peak were pooled, extracted with DCM, rotary-evaporated and the residue dissolved in methanol. About 90% of this sample was eluted through the same preparative HPLC column using Mobile Phase "B" (Example 2). After extraction in DCM and removal of the solvent from fractions containing the "dihydro-humulone" peak (to which 0.1 mole/mole of butylated hydroxytoluene (BHT) had been added), there remained 0.36 mg of "dihydro-humulone". This residue was dissolved in DCCl₃ and the H-NMR spectrum obtained at 400 MHz. The NMR spectrum was very similar to that of dihydro-humulone except for singlet peaks at 0.08 and 1.27 ppm and a very broad peak at 1.52 ppm that are not in the H-NMR spectrum of dihydro-humulone. These peaks are believed to be due to impurities. As further evidence, we find that the relative retention times of the "dihydro-humulone" peak and that of dihydro-humulone itself in two Mobile Phases are identical. The same is true also for the relative retention times in two Mobile Phases of the corresponding peaks that appear after photo-isomerization of the "dihydro-humulone" in methanol. Assuming 90% recovery of "dihydro-humulone" from 50 gm of the baled hops (probably an overestimate considering all of the purification steps) then the calculated amount of dihydro-humulone would be 0.90 mg or 0.0018% in this sample of hops.

### EXAMPLE 4

### Dihydro-iso-humulone in Beer

Samples of commercial beers were degassed by careful sonication of 250 ml of beer to which were added 1 drop of n-octanol. After warming to room temperature, samples were once again sonicated and carefully inspected to ensure no octanol droplets remained. An aliquot of each sample was diluted by 8 fold in 60 parts methanol / 40 parts water and analyzed by HPLC.

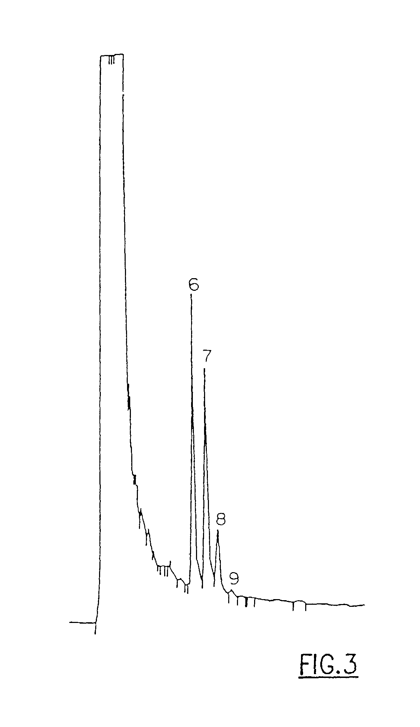

One of the beers, Corona, showed a peak (Fig. 3) that eluted behind iso-adhumulone, and this peak had a relative retention time (relative to iso-humulone) of 1.192, essentially identical to the value of 1.195 previously obtained for dihydro-iso-humulone in the same HPLC system.

The estimated concentration of dihydro-iso-humulone in this beer was 0.17 ppm, representing about 1.0% of the total isomerized alpha-acids.

### EXAMPLE 5

### Formation of Dihydro-humulone by Catalytic Hydrogenation of Alpha-acids

"Alpha-fraction" was prepared by adding 50% (w/w) NaOH to 1984 gm of supercritical carbon dioxide extract (prepared by Hops Extract Corporation of America, Inc.) in 4 1 of de-ionized water which was rapidly stirred at 60°C until reaching a pH of 7.9. The stirrer was then turned off and the phases allowed to separate. The lower, resinous phase was withdrawn and the aqueous phase was then titrated with 10 N sulfuric acid to a pH of 2.2 and the precipitated, resinous, "alpha-fraction" collected after the phases had separated. This fraction contained 48.8% humulone (+adhumulone), 29.7 cohumulone and 7.1% beta-acids. 10g of this "alpha-fraction" were solubilized and diluted to 100 ml with ethanol to which was added 0.7 ml of 2M NaOH, and then filtered. 70 ml of the resulting solution was added to 2.0 gm of 5% platinum on carbon (49.5% water by weight, Escat 22, Engelhard Corp., Edison, N.J.) in a high pressure Soxhlet extractor (J & W Scientific) equipped with a 0-120 (0-8.4 kg/sq. cm) psi pressure gauge. Following removal of air by application of vacuum, hydrogen was introduced to a (closed system) pressure of 80.0 psig (5.6 kg/sq. cm) and the hydrogenation reaction initiated by stirring with a magnetic stirring bar at room temperature. The reaction was terminated after 28 hours, the pressure having decreased by 6.7 psi. The catalyst was then removed by centrifugation and filtration and the concentration of each compound in the ethanolic solution was determined by HPLC. About 66% of the cohumulone was found to have been hydrogenated, the ratio of the concentration of dihydro-humulone (+ dihydro-adhumulone) to tetrahydro-humulone (+ tetrahydro-adhumulone) being 8.3.

Hydrogenation of "alpha-fraction" at 0°C instead of at room temperature caused only a slight improvement in the dihydro-humulone (+ dihydro-adhumulone) to tetrahydro-humulone (+ tetrahydro-adhumulone) ratio at the expense of needing more catalyst (see Table 1).

5% Palladium on carbon (Escat 111, 49.3% water, Engelhard Corp.) hydrogenated alpha-acids more rapidly than Platinum on carbon, though proportionally more of the tetrahydro-alpha-acids were formed (see Table 1).

The highest ratio of [dihydro-humulone + dihydro-adhumulone]("DHH")/[tetrahydro-humulone + tetrahydro-adhumulone] ("THH") was obtained with 5% platinum on alumina, although the reaction proceeded more slowly than with 5% platinum or carbon even though more catalyst was used (see Table 1).

**TABLE 1**

| Catalyst | pH2 (psi) | gm Catalyst*/gm "alpha-fraction" | % "DHH"\ %"THH" | %Cohumulone hydrogenated | Reaction Time (hr.) | %Yield of "DHH" |
|---|---|---|---|---|---|---|
| Pt on C | 80(1) | 0.12 | 8.3 | 66 | 28 | 57 |
| Pt on C** | 80 | 0.30 | 9.3 | 62 | 25 | 45 |
| Pt/Alumina | 80 | 0.43 | 12.7 | 59 | 51 | 50 |
| Pd on C # | 60(2) | 0.13 | 3.4 | 74 | 7 | 51 |
| Pt on C + | 40(3) | 0.20 | 4.3 | 87 | 8 | 66 |

| | | | | | | |
|---|---|---|---|---|---|---|
| *Dry weight basis | | | | | | |
| **Hydrogenation reaction at 0°C | | | | | | |
| #3.8 ml of 6 M NaOH were added to 10 gm of "alpha-fraction" and made up to 100 ml with 95% ethanol. When diluted in water, the pH was 7.9. | | | | | | |
| +"Alpha-fraction" prepared from liquid CO₂ extract. (1) 5.6 kg/sq. cm (2) 4.2 kg/sq. cm (3) 2.8 kg/sq. cm | | | | | | |

### EXAMPLE 6

### Formation of Dihydro-humulone from the Solid State Reaction of Humulone Induced with Varying Amounts of NaOH

To each 2 ml glass vial were added 55 µl of a methanolic solution containing 12.0 mg of humulone (+adhumulone), 99% pure (prepared by HPLC) and 0.3 mg BHT as an antioxidant, plus various amounts of 1.5 M NaOH in methanol. (For example, 8.8µl of 1.5 M NaOH to obtain a molar ratio of [NaOH]/[humulone (+adhumulone)] = 0.4). The methanol was removed by vacuum-evaporation at 40°C for 2 1/2 hours. Each sample was capped under nitrogen and stored in the dark at room temperature (approximately 20°C) for 7 days.

The results in Table 2 indicate that maximal formation of dihydro-humulone (+ dihydro-adhumulone) and maximal loss of humulone (+adhumulone) occur at about 0.4 moles NaOH per mole humulone (+adhumulone). There are a number of post-lupulone peaks (detected by HPLC using a Mobile Phase of 88 parts methanol/12 parts water/0.22 parts of 85% H₃PO₄/0.05 parts 0.1 M Na₄EDTA) whose concentration is approximately equal to that of the concentration of dihydro-humulone (on the assumption of equivalent extinction coefficients at 270 nm). Another major reaction product elutes (on HPLC) immediately before cohumulone as well as two peaks close to where iso-humulone and iso-adhumulone elute. These results suggest that donation to a humulone molecule of the required two hydrogen atoms to form dihydro-humulone is provided by a neighboring alpha-acid molecule. The exact mechanism of this reaction is not known. However, without being bound by theory, it is believed that the sodium cation might form a salt linkage between, for instance, two humulone molecules, bringing the molecules in sufficiently close proximity to cause the intermolecular transfer of hydrogen atoms and thereby forming both dihydro-humulone and a dehydrogenated humulone of unknown structure. We believe molecules of this latter compound then combine to form oligomeric reaction products (appearing as the post-lupulone peaks on HPLC analysis).

**Table 2**

| [NaOH]/ [Humulone (+ adhumulone)] | mg of Dihydrohumulone (+ dihydro-adhumulone) | mg of Humulone + Adhumulone |
|---|---|---|
| 0.0 | 0.0 | 12.0 |
| 0.2 | 0.66 | 9.65 |
| 0.3 | 2.52 | 4.97 |
| 0.4 | 3.14 | 3.41 |
| 0.6 | 2.21 | 5.59 |
| 0.9 | 0.49 | 10.5 |

### EXAMPLE 7

### Dihydro-humulone Formation in Presence of Various Alkalis

Various alkalis were tested for their ability to form dihydro-humulone (+ dihydro-adhumulone) from humulone (+adhumulone). Both LiOH and KOH were dissolved in methanol at a concentration of 1.0 M and added to 55 µl of a methanolic solution containing 12 mg of humulone (+ adhumulone) and 0.3 mg of BHT contained in a 2 ml glass vial. Because of the low solubility of NaHCO₃ and Na₂CO₃ in methanol, the methanolic solution of humulone (+ adhumulone) was added to solid Na₂CO₃ and NaHCO₃ and sonicated until all of the alkali was dissolved. For all samples, [alkali]/[humulone (+adhumulone)] = 0.4. Methanol was removed by vacuum-evaporation at 40°C for 2 1/2 hours. The vials were capped under nitrogen and stored for 7 days at room temperature in the dark.

The results (Table 3) showed that NaOH and NaHCO₃ caused the greatest formation of dihydro-humulone (+ dihydro-adhumulone) while KOH was the least effective alkali tested.

**Table 3**

| Alkali | mg of Dihydrohumulone (+ dihydro-adhumulone) | mg of Humulone + Adhumulone |
|---|---|---|
| LiOH | 2.46 | 5.50 |
| NaOH | 3.16 | 3.42 |
| KOH | 0.74 | 9.40 |
| NaHCO₃ | 3.26 | 3.34 |
| Na₂CO₃ | 1.58 | 7.37 |

### EXAMPLE 8

### Dihydro-humulone Formation in "Alpha-fraction" Incubated with NaOH. Avoidance of Undesirable Organic Solvents

Though the preceding two examples involved using methanol. and relatively pure humulone (+adhumulone), neither is necessary for this process. The methanol can be substituted with another lower alcohol, preferably ethanol, which is a substance particularly acceptable to the brewing industry.

To 27.8 gm of "alpha-fraction" (57.9% humulone + adhumulone, 28.8% cohumulone and 4.8% beta-acids (c.f. Example 5)) was added 25.0 ml of 1.06 M NaOH in 100% ethanol (Quantum Chemical Corp.) such that [NaOH]/[alpha-acids] = 0.39. The sample was stirred until the "alpha-fraction" was completely dissolved and then subjected to rotary-evaporation at 40°C until frothing ceased. The temperature of the water bath was then slowly increased in steps of 10°C and maintained at each step for about 30 minutes. The final temperature was 70°C. The resin became very viscous and had a deep red color. The flask containing the resin was transferred to a vacuum desiccator, flushed with nitrogen and stored at room temperature for 23 days. An aliquot was then removed for HPLC analysis. The sample contained 14.2% dihydro-humulone (+ dihydro-adhumulone), 20.4% humulone (+ adhumulone) + dihydro-cohumulone, 2.8% iso-humulone (+ iso-adhumulone), 11.0 % cohumulone, 4.1% beta-acids and 3.1% of substances eluting before the iso-alpha-acids (and assumed to have the same extinction coefficients at 270 nm). The yield of dihydro-humulone (+ dihydro-adhumulone) was 24%.
Conversion efficiency was 38% as calculated from the loss of humulone (+ adhumulone), after allowing for the expected contribution to peak area from co-eluting dihydro-cohumulone.

### EXAMPLE 9A

### Dihydro-humulone Formed from "Alpha-fraction" in Absence of Organic Solvents

Dihydro-humulone also can be formed from the "alpha-fraction" and alkali without using any organic solvent as indicated in this example.

To "alpha fraction" (72.2% humulone + adhumulone, 22.1% cohumulone, 5.0% beta-acids) at 70°C was added a saturated, aqueous solution of sodium dibasic phosphate (saturated at 85°C, solution contained 10.7 gm of sodium dibasic phosphate, 0.4 moles of sodium dibasic phosphate per mole of alpha acids). The sample was mixed with a blender for 2 minutes. The sample was then rotary-evaporated at 60°C for 20 minutes and then for 20 minutes at 70°C.

Other samples were prepared exactly as described above except for the alkali. For the potassium dibasic phosphate-treated sample, a saturated (at 80°C) solution, containing 13.1 gm of potassium dibasic phosphate (0.4 moles of potassium dibasic phosphate per mole of alpha acids) was used. For the potassium carbonate-treated sample, 6.50 gm of anydrous, 325 mesh potassium carbonate (0.25 moles potassium carbonate per mole alpha acids) was used.

After storage for 34 days at room temperature (20-22°C), the samples were analysed by HPLC. The results are presented in the table 4.

**Table 4.**

| Alkali | %Dihydro humulone (+dihydro -adhumulo ne) | % Humulone (+adhumulone) | %DHH* %Hum | % Cohumulone | % Beta-acids |
|---|---|---|---|---|---|
| Na₂HPO₄ | 18.9 | 9.3 | 0.40 | 6.4 | 4.5 |
| K₂HPO₄ | 19.3 | 10.5 | 0.39 | 5.3 | 4.7 |
| K₂CO₃ | 18.6 | 12.2 | 0.40 | 6.1 | 4.3 |

| | | | | | |
|---|---|---|---|---|---|
| *DHH refers to dihydro-humulone (+dihydro-adhumulone). Hum refers to humulone (+adhumulone). The conversion efficiency was calculated from the loss of humulone (+adhumulone). | | | | | |

### Example 9B

### Dihydro-humulone Formed from "Alpha-fraction" in Which Not All of The Alpha-Acids Have Been Protanated

1933 gm of liquid CO₂ extract (variety: Galena) was added to 5.0 liters of water at 55°C with stirring at 325 rpm. A total of 160 milliliters of 50% (w/w) of sodium hydroxide was added to bring the pH to 8.1. After standing for 1 hour, the aqueous phase was removed. To the aqueous phase was added 125 milliliters of 50% (w/w) sulfuric acid; the pH was 6.7. The sample was refrigerated overnight and 1022 gm of "alpha fraction" was collected. The yield of alpha acids from the CO₂ extract was 76%. The "alpha fraction" contained 43.3% humulone (+adhumulone), 29.8% cohumulone, 5.1% beta-acids and 0.5% dihydro-humulone.

The dihydro-humulone content of this "alpha fraction" increased to 2.0% after refrigeration for 16 days. After 7.5 months of refrigeration, the sample contained 6.1% dihydro-humulone with a conversion efficiency of 35% (c.f. Example 8).

### Example 10

### Dihydro-humulone Formation From Supercritical CO₂ Extract

To 80.0 gm of a supercritical CO₂ extract (variety Nugget, consisting of 44.1% humulone (+adhumulone), 15.5% cohumulone, 18.8% beta-acids) at 70°C was added an aqueous, saturated solution of potassium dibasic phosphate (containing 9.62 gm of potassium dibasic phosphate, 0.4 moles of potassium dibasic phosphate per mole of alpha acids). This sample was mixed with a blender for 2 minutes and then rotary-evaporated for about 15 minutes at 60°C and 20 minutes at 70°C. After storage for 35 days at room temperature (20-22°C) the sample consisted of 8.5% dihydro-humulone (+dihydro-adhumulone), 20.1% humulone (+adhumulone), 7.6% cohumulone and 18.0% beta-acids.

### EXAMPLE 11

### Preparation of Dihydro-iso-alpha-acids from "Alpha-fraction" via Catalytic Hydrogenation

"Alpha-fraction" (14.2 gm, analysis as per Example 8) was hydrogenated with 5% platinum on carbon (Johnson Matthey Inc., type 18M, 51.9% water, 0.25 gm catalyst per gm "alpha-fraction") in methanol at 60 psig for 4 hours at room temperature. Analysis showed that 92% of the cohumulone had been hydrogenated and the ratio [dihydro-humulone (+ dihydro-adhumulone)]/[tetrahydro-humulone (+ tetrahydro-adhumulone)] was 2.9. Following recovery of the catalyst by filtration, most of the methanol was removed by rotary-evaporation. The resultant resin was then stirred in 60 ml of deionized water at 55°C and 6 M NaOH was added until a pH of 9.6 was reached. 3.2 ml of 2 M MgSO₄ was then added slowly. The temperature was raised to 80°C under nitrogen atmosphere and maintained for 1 1/2 hours. 10 N H₂SO₄ was then added until the pH was 2.1. The weight of the orange-colored resinous phase thus formed was 14.3 gm. The isomerized, hydrogenated resin contained:

| | |
|---|---|
| Dihydro-iso-humulone | 3.33 g |
| Dihydro-iso-cohumulone | 2.21 g |
| Dihydro-iso-adhumulone + tetrahydro-iso-cohumulone | 2.13 g |
| Tetrahydro-iso-humulone (+ tetrahydro-iso-adhumulone) | 2.08 g |
| Dihydro-humulone (+ dihydro-adhumulone) + tetra-hydro-cohumulone | 0.51 g |
| Dihydro-cohumulone | 0.38 g |
| Iso-humulone | 0.33 g |
| Iso-cohumulone | 0.26 g |
| Hydrogenated beta-acids Tetrahydro-humulone (+ tetrahydro- | 0.36 g |
| adhumulone) | 0.12 g |

A total of about 90% of the dihydro-humulone was calculated to have been isomerized into dihydro-iso-humulone.

### EXAMPLE 12

### Preparation of Dihydro-iso-alpha-acids from CO₂ Extract via Catalytic Hydrogenation

20.0 gm of supercritical CO₂ extract (Eroica) was dissolved to 100 ml volume with 95% ethanol plus 0.6 ml of 6 M KOH. The solution was stirred with 4.0 gm of activated carbon for 1 hour with nitrogen bubbled through the solution. After filtration and storage in a freezer, about 70 ml of the above solution was added to 4.2 gm of 5% platinum on carbon (Escat 22, Engelhard Corp., 49.5% water). The hop resins were hydrogenated at 80 psig for 4.5 hours at room temperature. A decrease in pressure of 14.9 psi was recorded. After filtration and washing of the catalyst with methanol, the volume of filtrate was brought to 100 ml. HPLC analysis showed that 50.6% of the cohumulone had been hydrogenated and the ratio [dihydro-humulone (+ dihydro-adhumulone)] / [tetrahydro-humulone (+ tetrahydro-adhumulone)] was 9.3.

Most of the solvent was removed from 30 ml of the above solution by rotary-evaporation. 100 ml of deionized water was added to the resultant resin and a total of 4.4 ml of 2 M KOH was added to the rapidly vortexed suspension at 60°C in a flask to give a final pH of 8.4. The black, resinous phase was discarded after centrifugation. To the aqueous solution was added 0.52 ml of 1.5 M MgSO₄ and the pH raised to 9.6 with addition of 0.3 ml of 2 M KOH. After incubating the solution for 1 hour at 90° C, the pH was lowered to about 1.6 with 10 N H₂SO₄. After standing for a while at 70°C, the translucent aqueous phase was removed. The yellow resinous phase was stirred in 2 ml of deionized water at 60°C and the pH brought to 8.5 - 9 with addition of 6 M KOH. A clear, yellow-orange solution suitable for addition to beer was obtained that consisted of:

| | |
|---|---|
| Dihydro-iso-cohumulone + iso-adhumulone | 9.1% |
| Dihydro-iso-humulone | 8.0% |
| Iso-humulone | 7.6% |
| Iso-cohumulone Dihydro-iso-adhumulone + tetrahydro- | 6.8% |
| iso-cohumulone | 2.5% |
| Tetrahydro-iso-humulone | 0.8% |
| Beta-acids | 4.9% |

About 98% of the dihydro-humulone (+ dihydro-adhumulone) formed after hydrogenation was calculated to have been isomerized into dihydro-iso-humulone (+ dihydro-iso-adhumulone).

### EXAMPLE 13

### Isomerization of Alkali-treated "Alpha-fraction"

"Alpha fraction" was treated with an aqueous, saturated solution of sodium dibasic phosphate as described in example 9 and was stored at room temperature for 16 days. About 185 gm of the resin was dissolved in absolute ethanol and filtered. The ethanolic solution contained 25.7 gm of dihydro-humulone (+dihydro-adhumulone). To the ethanolic solution was added 25 milliliters of 6 Normal potassium hydroxide and then all of the sample was added to 3.3 liters of de-ionized water at 69°C with stirring and under nitrogen atmosphere. A total of 134 milliliters of 1 Molar potassium hydroxide (+0.1 Molar potassium carbonate) was added slowly while the temperature of the sample was increased to 91°C; the pH was 9.7. The reaction was continued for 11.5 hours with occasional addition of alkali to maintain the pH at 9.3 to 9.5. 87% of the dihydro-humulone (+dihydro-adhumulone) was isommerized to dihydro-iso-humulone (+dihydro-iso-adhumulone). The pH was decreased to 7.6 by addition of 5% (w/w) sulfuric acid; the temperature was decreased to 76°C. The reddish-colored resin was discarded. The aqueous phase contained 15.2 gm of dihydro-iso-humulone (+dihydro-iso-adhumulone) and 0.5 gm of dihydro-humulone (+dihydro-adhumulone). The yield of dihydro-iso-humulone (+dihydro-iso-adhumulone) from the dihydro-humulone (+dihydro-adhumulone) was 59%.

### EXAMPLE 14

### Foam Stabilizers Added to Beer

Purified compounds were obtained by preparative HPLC methodology described in Examples 1-3. Iso-cohumulone and iso-humulone were isolated from a 30% aqueous iso-alpha-acids solution (Steiner Hops Ltd., Epping, U.K.), dihydro-iso-alpha-acids from hydrogenated and isomerized "alpha-fraction" (see Example 11) and tetrahydro-iso-alpha-acids from "Tetralone" (Kalsec Inc.). The purified compounds were first dissolved in methanol (50-70 mg/ml) and then diluted in an aqueous solution of 0.015 M NaOH. Dilute NaOH was added to adjust the pH in the range of 7-8 so as to dissolve all of the compound. The final concentration of each compound, about 5 mg/ml, was determined by HPLC. Aliquots were added to bottles of commercial beers which were then capped, swirled vigorously and stored overnight in a refrigerator. An obvious ring of insoluble material was observed to have formed just above the liquid surface in the neck of bottles to which had been added 5 or 10 ppm of tetrahydro-iso-humulone or 10 ppm of tetrahydro-iso-cohumulone. Only a slight ring was formed with the addition of 10 ppm of dihydro-iso-humulone and none at all at 5 ppm addition. Bottles were placed in a 10°C water bath for at least one hour before being tested for foam stability and foam lacing.

In order to test foam stability, bottles of beer were poured into a 1 liter, cylindrical separatory funnel with the help of a wide mouth funnel. Every 165 seconds, 75 ml of beer was drained from the funnel within 15 seconds, until all of the beer was removed (by 10 minutes). The foam was collapsed with 2 ml of added ethanol, then drained from the funnel and weighed. The foam stability was recorded as the ratio of the weight of the foam of the sample to that of the average weight of the foam of the control beers (to which corresponding amounts of water had been added). Results are given in Table 5. Each value is the average from at least two experiments.

Foam lacing was visually assessed by the following procedure: the bottled beer was poured into 1 1, tall form beakers (previously cleaned with chromic/sulfuric acid, rinsed with deionized water and air dried) using a pouring device constructed as specified by Jackson and Bamforth, J. Inst. of Brewing (1982), 88, p 378. After exactly 10 minutes, the beakers were photographed and the lacing compared.

**Table 5**

| Foam Stability of Beers Treated with Foam Stabilizers Foam Stability | | | | | | |
|---|---|---|---|---|---|---|
| Compound | Conc. (ppm) | Budweiser | Busch | Bud Light | Coors Light | Old Milwaukee Light |
| Iso-cohumulone | 5 | 1.04 | 1.04 | 1.00 | 1.02 | 1.04 |
| Iso-humulone | 5 | 1.13 | 1.09 | 1.09 | ---- | 1.09 |
| Dihydro-isocohumulone | 5 | 1.08 | 1.10 | 1.13 | 1.11 | 1.08 |
| Dihydro-iso-humulone | 5 | 1.16 | 1.16 | 1.22 | 1.35 | 1.31 |
| Tetrahydro-iso-cohumulone | 5 | 1.21 | 1.20 | 1.29 | 1.28 | 1.34 |
| Tetrahydro-iso-humulone | 5 | 1.41 | 1.32 | 1.36 | 1.53 | 1.49 |
| "Tetralone"* | 5 | 1.20 | ---- | ---- | ---- | ---- |
| Iso-cohumulone | 10 | 1.02 | 1.04 | ---- | ---- | ---- |
| Iso-humulone | 10 | 1.12 | 1.07 | 1.04 | ---- | ---- |
| Dihydro-iso-cohumulone | 10 | 1.21 | 1.08 | 1.14 | ---- | ---- |
| Dihydro-iso-humulone | 10 | 1.41 | 1.35 | 1.41 | ---- | ---- |
| Tetrahydro-iso-cohumulone | 10 | 1.44 | 1.37 | 1.53 | ---- | ---- |
| Tetrahydro-iso-humulone | 10 | 1.79 | 1.75 | 1.87 | ---- | ---- |
| Average weight of control foam (in gm) | | 6.16 | 6.74 | 4.55 | 3.73 | 6.28 |
| Concentration of iso-alpha-acids in | | | | | | |
| control beers (ppm) | 9.3 | 13.0 | 13.6 | 12.1 | 15.6 | |

| | | | | | | |
|---|---|---|---|---|---|---|
| *Kalsec, Inc. | | | | | | |

### Observations:

In most cases dihydro-iso-humulone, at a concentration of 5 ppm, significantly improved the foam stability of the light beers as compared with the improvement caused by 5 ppm of added iso-humulone. Dihydro-iso-humulone is only slightly less effective than tetrahydro-iso-cohumulone or "Tetralone" (which contains predominantly tetrahydro-iso-cohumulone) at a concentration of 5 ppm in most of the beers tested. At 10 ppm in beer, dihydro-iso-humulone was considerably more effective than iso-humulone at improving the foam stability and nearly as effective as tetrahydro-iso-cohumulone.

It was observed that in Budweiser and Bud Light beers, addition of 5 ppm dihydro-iso-humulone improved foam lacing to an even greater extent than did addition of 10 ppm iso-humulone. Both dihydro-iso-humulone and tetrahydro-iso-cohumulone effected especially obvious and comparable improvements to foam lacing in all beers, dependent on the quantity added.

### EXAMPLE 15

### Preparation of Hydrogenated, Isomerized Resin Extract (IRE)

Supercritical carbon dioxide extract (20.0 gm, 33.2% humulone + adhumulone, 20.2% cohumulone, 28.7% beta-acids) was dissolved to 100 ml volume with 95% ethanol and 2.0 ml of 2M NaOH. The solution was stirred with 4.0 gm of activated carbon for 1 hour with nitrogen bubbled through the solution. After filtration, 70 ml of the above solution was added to 7.33 gm of 5% platinum on carbon (Johnson Matthey, type 18M, 51.9% water) and the mixture hydrogenated at 60 psi for 17 hours. The catalyst was then removed by filtration. 30 ml of water was added to the ethanolic solution along with 5.86 ml of 1.45 M MgSO₄. The pH was adjusted to 8.7 by addition of 6 M NaOH. After reaction at 86°C for 1 hour, 10 N H₂SO₄ was added until a pH of 1.7 was obtained. The resinous phase, 11.4 gm (hydrogenated IRE) was collected, analyzed by HPLC and found to contain:

| | % |
|---|---|
| dihydro-iso-humulone (+ dihydro-iso-adhumulone) | 20.3 |
| dihydro-iso-cohumulone* | 12.3 |
| tetrahydro-iso-humulone (+ tetrahydro-iso-adhumulone) | 12.0 |
| tetrahydro-iso-cohumulone | 7.2 |
| dihydro-humulone (+ dihydro-adhumulone)** | 0.65 |
| dihydro-cohumulone | 0.71 |
| tetrahydro-humulone (+ tetrahydro-adhumulone) | 0.24 |
| iso-humulone | 0.91 |
| iso-cohumulone | 0.81 |

| | |
|---|---|
| *includes iso-adhumulone | |
| **includes tetrahydro-cohumulone | |

The inferred yield of dihydro-iso-humulone (+ dihydro-iso-adhumulone) was about 61%.

### Example 16

### Brewing Trial with Hydrogenated IRE

Hydrogenated IRE from Example 15, 0.361 gm, was dissolved in 3.0 ml of 95% ethanol plus 0.50 ml of 2M NaOH ( 1 equivalent of NaOH per iso-alpha-acids). 169 ml of an unhopped ale wort (S.G. 1.051) was boiled for 20 min. before adding 0.165 ml of the hydrogenated IRE solution. Boiling was continued for 15 min. and the wort then cooled to room temperature and the volume adjusted back to 169 ml with deionized water. The wort was centrifuged and the supernatant collected. A simulated "beer" was prepared from an aliquot of this wort by lowering the pH to 3.9 and allowing to chill overnight in a refrigerator. Samples of both the boiled wort and the "beer" were filtered, with the aid of added celite (Hyflo supercel) plus silica gel, through a glass fiber filter (Gelman Type A-E). Before analysis by HPLC, samples were diluted in methanol, sonicated and clarified by syringe filtration, again through a glass fiber filter (Gelman Type A-E). Yields of hydrogenated iso-alpha-acids are given in the the following table.

**Table 6**

| Compound | initial conc. in wort (ppm) | %yield in boiled wort | %yield "in beer" |
|---|---|---|---|
| dihydro-iso-cohumulone | 9.1 | 84 | 81 |
| dihydro-iso-humulone + dihydro-iso-adhumulone | 11.0 | 69 | 61 |
| tetrahydro-iso-cohumulone | 9.4 | 70 | 63 |
| tetrahydro-iso-humulone | 6.2 | 57 | 45 |

### Example 17

### Prehumulone Isolated From Hops

225 gm of hops (Chinook, 1990 crop) were extracted successively with 2 l and 1 l of hexane. After filtration, the combined volume of the hexane solution was reduced to 220 ml by rotary-evaporation. As determined by HPLC, the hexane solution contained an estimated 103 mg of a presumed alpha-acid that had a relative retention time of 1.325 (relative to humulone (+ adhumulone) using Mobile Phase "A"). The hexane solution was then washed with 600 ml of 0.025 Na₂CO₃ (pH of the aqueous phase= 7.6). The hexane phase was collected and successively washed with 600 ml aliquots of 0.046M NaOH (aqueous phase pH = 8.2) and then 0.037M NaOH (aqueous phase pH = 9.4), the phases being separated by centrifugation. Both aqueous phases were combined and the pH lowered to 3.0 with 10 N H₂SO₄. The aqueous phase was extracted with DCM until all of the color was transferred into the DCM (saturated NaCl was added to help break the phases). After rotary-evaporation of the DCM, the 10.4 gm of collected resin was dissolved in methanol to a final volume of 25 ml. This solution contained an estimated 45 mg of "prehumulone". A total of 20.7 ml of the methanolic solution (23 injections) were eluted through a preparative HPLC column using a Mobile Phase "E" consisting of 85 parts methanol /15 parts water and 0.26 parts of 85% phosphoric acid Fractions containing the "prehumulone" were pooled and then extracted with DCM, substantially as described in Examples 1-3. The remaining resin, after rotary-evaporation, was dissolved in 10 ml of hexane and chilled in a freezer overnight. The resultant colupulone crystals were removed by filtration. The hexane was evaporated with a stream of nitrogen and the resin, containing an estimated 26 mg of "prehumulone", was dissolved in a little methanol. The "prehumulone" in this methanolic solution was further purified by preparative HPLC using mobile phases "D" and "A". Pooled fractions containing purified "prehumulone" were extracted into DCM in the presence of BHT and dried over Na₂SO₄. The DCM was removed by rotary-evaporation and the sample brought to constant weight under a stream of nitrogen. 15.6 mg of a viscous, yellow resin was obtained (excluding the mass of BHT). HPLC analysis indicated a purity of about 92%.

NMR analysis was performed on a sample of the resin dissolved in DCCl₃. From the ¹H and carbon-13 NMR spectra and the heteronuclear (H,C) COSY spectrum the carbon and proton assignments, as listed in Table 9, were obtained. The carbon assignments for the hydroxyl protons at 4.21 and 7.05 ppm and the enolic proton at 18.82 ppm could not be made.

**Table 9**

| Carbon-13 and Proton NMR Data of Prehumulone. Chemical Shifts (ppm) | | |
|---|---|---|
| ¹³C | ¹H | Number of Protons |
| 17.74 | 1.73 | 3 |
| 17.86 | 1.53 | 3 |
| 21.05 | 3.04, 3.08 | 2 |
| 22.31 | 0.94 | 3 |
| 22.36 | 0.93 | 3 |
| 25.71 | 1.68 | 3 |
| 25.96 | 1.69 | 3 |
| 28.11 | 1.64 | 1 |
| 34.48 | 1.47, 1.60 | 2 |
| 36.07 | 2.87 | 2 |
| 42.64 | 2.44, 2.54 | 2 |
| 115.76 | 5.00 | 1 |
| 120.99 | 5.12 | 1 |

Other carbon-13 chemical shifts include: 78.75, 105.44, 109.17, 132.77, 138.17, 167.67, 190.72, 194.97, and 201.06 ppm.

From the homonuclear (H,H) COSY, the molecular connectivities of the hydrogen-containing carbons were established. The R group was tentatively identified as -CH₂ -CH₂ -CH -(CH₃)₂. An alpha-acid having this same structure has previously been identified as prehumulone by Rillaers, G. and Verzele, M. in Bull. Soc. Chim. Belg. (1962) 71, 438-445.

### Example 18

### Preparation of Photo-iso-prehumulone

After NMR analysis, DCCl₃ was removed from the prehumulone solution (Example 17) and the sample was then redissolved in 1.0 ml of methanol. The prehumulone was then photo-isomerized by exposure to sunlight. The photo-iso-prehumulone so formed was purified by preparative HPLC using Mobile Phase "D" of Example 3 and extracted into DCM as described in Examples 1-3. After rotary-evaporation of the DCM, the sample was brought to constant weight with a stream of nitrogen. 5.4 mg of the photo-iso-prehumulone obtained was dissolved in 0.17 ml of 95% ethanol and then 1.4 ml of 0.01 M NaOH was added. The solution had a pH of about 9.2 and was estimated to be 99% pure by HPLC. The concentration of photo-iso-prehumulone was 3.4 mg/ml.

### Example 19

### Photo-iso-prehumulone as a Foam Stabilizer In Beer.

Aqueous solutions of photo-iso-prehumulone (Example 18), dihydro-iso-humulone and tetrahydro-iso-cohumulone were added to bottles of Bud Light beer which were then capped, swirled vigorously and stored overnight in a refrigerator. The concentration of each compound in the beer was 5 ppm. Foam stability was tested as described in Example 14. Results (Table 10) indicated that photo-iso-prehumulone is not an especially effective foam stabilizer. Comparison with Table 5, shows that photo-iso-prehumulone is no more effective as a foam stabilizer than iso-humulone.

**Table 10**

| Foam Stability of Beer Treated with Compounds at a Concentration of 5 ppm* | |
|---|---|
| Compound | Foam Stability |
| Photo-iso-prehumulone | 1.05 |
| Dihydro-iso-humulone | 1.28 |
| Tetrahydro-iso-cohumulone | 1.30 |

| | |
|---|---|
| *Results are an average from two bottles of Bud Light beer. | |

### Utility of the Invention

As can be seen from the foregoing, dihydro-iso-humulone or iso-"adprehumulone" advantageously may be employed as the sole or major ingredient of foam stabilizing preparations. Moreover, we have observed that dihydro-iso-humulone containing preparations in accordance with the present invention appear to be less prone to "bath-tub ring" than are tetrahydro-iso-alpha-acids employed at similar concentrations. In addition, the lower bittering potential of dihydro-iso-humulone allows for greater flexibility in use without necessitating such substantial changes in brewery hopping procedures in order to enhance beer foam to the desired extent.

It is a further advantage of our invention that the brewer is enabled to enhance beer foam through use of isomerized derivatives of substances that are naturally occuring compounds found in quite minor amounts in fresh hops, and in the case of dihydro-humulone in somewhat greater amounts in hop pellets, and observed to exist in hop extracts. Quite minor (functionally insignificant) amounts of the dihydro-iso-humulone are believed to have been observed in certain commercial beers.

The dihydro-iso-humulone or iso-"adprehumulone" in accordance with the present invention may be added to beer over a wide range of concentrations depending on taste. Typically from about 2 to 30 ppm, preferably 5 to 10 ppm, depending on foam stabilization and taste desired, has been found to be adequate. The dihydro-iso-alpha-acids or iso-"adprehumulone" in accordance with the present invention may be added during brewing or following brewing.

## Claims

1. A method of preparing a malt beverage in which wort is prepared and fermented, and a foam stabilizing and bittering agent added, characterized by adding as a foam stabilizing and bittering agent from about 2 to about 30 ppm of at least one dihydro-iso-alpha acid.

2. A method according to claim I, characterized in that the dihydro-iso-alpha-acid is selected from dihydro-iso-humulone, dihydro-iso-adhumulone and mixtures thereof, and wherein said dihydro-iso-alpha-acid is added in an amount in the range of from about 5 to about 10 ppm.

3. A process for producing a foam stabilizing and bittering agent for a malt beverage, characterized by the steps in sequence of: (1) extracting pelletized hops using supercritical CO₂ or liquid CO₂, under conditions which favor the separation and recovery of a fraction rich in alpha-acids; (2) subjecting the alpha-acids fraction to selective hydrogenation in the presence of a Pt/alumina catalyst or a Pt/carbon catalyst so as to produce dihydro-alpha-acids; and (3) isomerizing said dihydro-alpha-acids, so as to form dihydro-iso-alpha-acids.

4. A process for producing a foam stabilizing and bittering agent for a malt beverage, characterized by the steps in sequence of: (1) extracting pelletized hops using supercritical CO₂ or liquid CO₂, under conditions which favor the separation and recovery of a fraction rich in alpha-acids; (2) converting the alpha-acids fraction to dihydro-alpha-acids by reaction in the presence of 0.3 to 0.6 equivalents of alkali per mole of alpha-acids, in a substantially non-aqueous environment; and (3) isomerizing said dihydro-alpha-acids, so as to form dihydro-iso-alpha-acids.

5. A process according to claim 4, characterized in that the alkali is selected from NaOH, LiOH, KOH, Na₂CO₃, N₂HCO₃, Na₂HPO₄, K2HPO₄ and K₂CO₃.

6. A process according to claim 4, characterized by including the step of dissolving said alkali in a lower alcohol and then adding the resulting alcoholic solution to said alpha acids.

## Patentansprüche

1. Verfahren zur Herstellung eines Malzgetränks, bei dem Würze hergestellt und fermentiert und ein Schaumstabilisator und Bitterstoff zugegeben wird, dadurch gekennzeichnet, daß als Schaumstabilisator und Bitterstoff etwa 2 bis etwa 30 ppm wenigstens einer Dihydro-iso-alphasäure zugegeben werden.

2. Verfahren nach Anspruch 1, dadurch gekennzeichnet, daß die Dihydro-iso-alphasäure aus Dihydro-iso-humulon, Dihydro-iso-adhumulon und deren Mischungen ausgewählt wird, und daß die Dihydro-iso-alphasäure in einer Menge von zwischen etwa 5 und etwa 10 ppm zugegeben wird.

3. Verfahren zur Herstellung eines Schaumstabilisators und Bitterstoffs für ein Malzgetränk, gekennzeichnet durch die folgenden Schritte in dieser Reihenfolge:
(1) Extrahieren von zerkleinertem Hopfen unter Verwendung von überkritischem CO₂ oder flüssigem CO₂, unter Bedingungen, welche die Abtrennung und Gewinnung einer alphasäurereichen Fraktion begünstigen,
(2) selektives Hydrieren der Alphasäuren-Fraktion in Gegenwart eines Pt/Aluminiumoxid-Katalysators oder eines Pt/Kohlenstoff-Katalysators zur Herstellung von Dihydro-alphasäuren, und
(3) Isomerisieren der Dihydro-alphasäuren unter Bildung von Dihydo-iso-alphasäuren.

4. Verfahren zur Herstellung eines Schaumstabilisators und Bitterstoffs für ein Malzgetränk, gekennzeichnet durch die folgenden Schritte in dieser Reihenfolge:
(1) Extrahieren von zerkleinertem Hopfen unter Verwendung von überkritischem CO₂ oder flüssigem CO₂, unter Bedingungen, welche die Abtrennung und Gewinnung einer alphasäurereichen Fraktion begünstigen;
(2) Umwandeln der Alphasäuren-Fraktion zu Dihydro-alphasäuren durch Umsetzen in Gegenwart von 0,3 bis 0,6 Equivalenten Alkali pro mol Alphasäuren in einer im wesentlichen wasserfreien Umgebung; und
(3) Isomerisieren der Dihydro-alphasäuren unter Bildung von Dihydro-iso-alphasäuren.

5. Verfahren nach Anspruch 4, dadurch gekennzeichnet, daß das Alkali aus NaOH, LiOH, KOH, Na₂CO₃, NaHCO₃, Na₂HPO₄, K₂HPO₄ und K₂CO₃ ausgewählt wird.

6. Verfahren nach Anspruch 4, dadurch gekennzeichnet, daß das Verfahren den Schritt des Auflösens des Alkali in einem niederen Alkohol und das Zugeben der erhaltenen alkoholischen Lösung zu den Alphasäuren umfaßt.

## Revendications

1. Procédé pour préparer une boisson maltée dans laquelle du moût est préparé et fermenté, et un agent d'amertume et de stabilisation de la mousse est ajouté, caractérisé par l'addition, en tant qu'agent d'amertume et de stabilisation de la mousse, d'environ 2 à environ 30 ppm d'au moins un dihydro-iso-α-acide.

2. Procédé selon la revendication 1, caractérisé en ce que le dihydro-iso-α-acide est choisi parmi la dihydro-iso-humulone, la dihydro-iso-adhumulone et leurs mélanges, et dans lequel ledit dihydro-iso-α-acide est ajouté en une quantité située dans la plage allant d'environ 5 à environ 10 ppm.

3. Procédé pour produire un agent d'amertume et de stabilisation de la mousse pour une boisson maltée, caractérisé par les étapes consistant successivement à : (1) extraire du houblon en granulés par utilisation de CO₂ supercritique ou de CO₂ liquide, dans des conditions qui favorisent la séparation et la récupération d'une fraction riche en α-acides ; (2) soumettre la fraction d'a-acides à une hydrogénation sélective en présence d'un catalyseur Pt/alumine ou d'un catalyseur Pt/charbon de façon à produire des dihydro-α-acides ; et (3) isomériser lesdits dihydro-α-acides, de façon à former des dihydro-iso-α-acides.

4. Procédé pour produire un agent d'amertume et de stabilisation de la mousse pour une boisson maltée, caractérisé par les étapes consistant successivement à : (1) extraire du houblon en granulés par utilisation de CO₂ supercritique ou de CO₂ liquide, dans des conditions qui favorisent la séparation et la récupération d'une fraction riche en α-acides ; (2) convertir la fraction d'α-acides en dihydro-α-acides par réaction en présence de 0,3 à 0,6 équivalent d'alcali par mole d'α-acides, dans un environnement pratiquement non aqueux ; et (3) isomériser lesdits dihydro-α-acides, de façon à former des dihydro-iso-α-acides.

5. Procédé selon la revendication 4, caractérisé en ce que l'alcali est choisi parmi NaOH, LiOH, KOH, Na₂CO₃, NaHCO₃, Na₂HPO₄, K₂HPO₄ et K₂CO₃.

6. Procédé selon la revendication 4, caractérisé en ce qu'il comprend l'étape de dissolution dudit alcali dans un alcool inférieur et ensuite d'addition de la solution alcoolique résultante auxdits α-acides.
